# EUROPÄISCHE PATENTSCHRIFT

(11) **EP 1 437 528 B1**
(45) Veröffentlichungstag und Bekanntmachung des Hinweises auf die Patenterteilung: **10.03.2010**
(21) Anmeldenummer: 04000325.3
(22) Anmeldetag: 09.01.2004
(51) Int. Cl.: F16H 7/12

(54) **Riemenspannvorrichtung**
Belt tensioner
Tendeur de courroie

(30) Priorität: 10.01.2003 DE 10300875; 14.05.2003 DE 10321801
(43) Veröffentlichungstag der Anmeldung: 14.07.2004
(73) Patentinhaber: Muhr und Bender KG, 57439 Attendorn (DE); Bayerische Motoren Werke Aktiengesellschaft, 80788 München (DE)
(72) Erfinder: Kobelev, Vladimir, Dr., 57439 Attendorn (DE); Berger, Rudolf, 52152 Simmerath (DE); Jung, Manfred, 52074 Aachen (DE); Lemberger, Heinz, 85774 Unterföhring (DE)
(74) Vertreter: Neumann, Ernst Dieter

(56) Entgegenhaltungen:
- EP-A- 1 420 192
- EP-A- 1 420 193
- WO-A-2004/042253
- DE-A1- 3 719 794
- DE-A1- 3 912 944

## Beschreibung

Die Erfindung betrifft eine Riemenspannvorrichtung für einen Riementrieb aus zumindest zwei Riemenscheiben und einem endlosen Riemen umfassend ein Torsionsfederaggregat. Ein typischer Anwendungsfall von Riementrieben liegt im Antrieb der Nebenaggregate eines Verbrennungsmotors, wobei eine erste Riemenscheiben auf der Kurbelwelle sitzt und den Riementrieb antreibt und weitere Riemenscheibe auf Nebenaggregaten wie Wasserpumpe, Lichtmaschine, Klimaanlagenkompressor u.s.w. sitzen und vom Riementrieb angetrieben werden. Hierbei entsteht in Umlaufrichtung hinter der antreibenden Riemenscheibe ein Lostrum, dessen Lose von einer Spannrolle ausgeglichen werden muß, damit der Riemen nicht von den Riemenscheiben abspringt. Im Laufe der Betriebsdauer und unter Temperatureinfluß verändert sich die Riemenlänge, so daß die Spannrolle in einer Führung federnd verschiebbar gehalten werden muß oder bevorzugt an einem federnd aufgehängten Spann- oder Spannarm pendeln muß.

Die auf die Spannrollen einwirkenden Vorspannkräfte werden in der Regel von Federaggregaten aufgebracht, die im Bereich der Lagerung eines Spannarmes sitzen und Bügelfedern enthalten, d. h. Schrauben- oder Haarnadelfedern mit zwei radial abstehenden Bügeln, bei denen eine Winkelveränderung der beiden abstehenden Bügel zueinander gegen elastische Federkräfte erfolgen kann. Hierbei zieht sich die Bügelfeder zu oder weitet sich auf. Federaggregate dieser Art benötigen einen relativ großen Einbaudurchmesser, der nicht in allen Anwendungsfällen zur Verfügung steht.

Aus der gattungsgemäßen DE 39 12 944 A1 ist eine Riemenspannvorrichtung bekannt, bei der als Federelement eine aus mehreren Drehstäben zusammengesetzte Drehstabfeder verwendet wird, deren Längsachse parallel zur Drehachse der Spannrolle verläuft, wobei die Spannrolle in einem Spannhebel gelagert ist, der am freien Ende der Drehstabfeder angeordnet ist. Das feste Ende der Drehstabfeder ist in einer Halterung fest eingespannt, die mit Anschraubmitteln zur Befestigung an einem festen Gehäuse versehen ist. Um eine Biegung der Drehstabfeder bei Belastung zu verhindern, ist diese in einem Führungsrohr angeordnet, wobei Drehstabfeder und Führungsrohr an dem den Spannhebel tragenden Ende beide drehfest mit dem Spannhebel verbunden sind. Das Führungsrohr seinerseits ist drehbar im Motorblock gelagert.

Aus der DE 37 19 794 A1 ist ein Schwenklager für einen Schwenkarm zur Lagerung einer Spannrolle an dessen freiem Ende bekannt, das eine Topfhülse umfaßt, die mit dem Schwenkarm drehfest verbunden ist. Innerhalb der Topfhülse sind zwei Böden angeordnet, von denen einer mit der Topfhülse durch Formschluß drehfest verbunden ist, und der andere in der Topfhülse mittels eines Nadellagers drehbar gelagert ist. Hierbei ist allerdings der letztgenannte Boden als mit einer Tragplatte versehener Tragkörper ausgebildet, gegenüber dem sich die Topfhülse verdrehen kann. Die beiden Böden sind über eine tordierbare Bandfeder miteinander verbunden. Zwischen den beiden Böden und in jeweils stirnseitigem Kontakt mit diesen liegt ein Reibring aus einem Material mit Reibeigenschaften.

Die Aufgabe der vorliegenden Erfindung ist es, eine kompakt bauende Riemenspannvorrichtung der genannten Art bereitzustellen.

Die Lösung besteht in einer Riemenspannvorrichtung für einen Riementrieb aus zumindest zwei Riemenscheiben und einem endlosen Riemen, umfassend ein Torsionsfederaggregat mit einer Längsachse A₂ und mit zumindest einem Torsionsstab oder -rohr, wobei das Torsionsfederaggregat axial und verdrehfest in einem Gestell einspannbar ist, einen Spannarm, der mit seinem einen Ende etwa radial zur Längsachse A₂ gerichtet am Torsionsfederaggregat angeordnet ist, sowie eine Spannrolle, die am anderen Ende des Spannarms drehbar befestigt ist, wobei die Drehachse A₁ der Spannrolle im wesentlichen parallel zur Längsachse A₂ des Torsionsfederaggregats verläuft und der Spannarm um die Längsachse A₂ schwingend gegenüber dem Gestell federnd abstützbar ist, wobei das Torsionsfederaggregat eine Mehrzahl von einzelnen Torsionsstäben enthält, die ein jeweils an ihren Enden miteinander zusammengespanntes Bündel bilden und Linien- oder Flächenkontakt miteinander haben und wobei das Rohr mit seinem einen Ende verdrehfest mit dem einen Ende des Bündels aus Torsionsstäben verbunden ist und mit seinem anderen Ende unter Reibung gegenüber dem anderen Ende des Bündels aus Torsionsstäben verdrehbar ist. Hierbei wird durch das Rohr ein zum Bündel aus Torsionsstäben parallel geschalteter Reibungsdämpfer gebildet.

In axialer Ansicht auf den Riementrieb werden hierbei Einbaumaße für die Spannvorrichtung möglich, die praktisch alleine durch die notwendige Größe des Spannarms vorgegeben sind. Das erfindungsgemäße Torsionsfederaggregat liegt in axialer Aufsicht auf den Riementrieb innerhalb der Kontur des Spannarms. Die notwendige axiale Länge für das Torsionsfederaggregat ist hierbei größer als bei Spannvorrichtungen herkömmlicher Art, bereitet jedoch bezüglich der Einbauverhältnisse im Motorraum geringere Probleme. Bevorzugt ist das Torsionsfederaggregat an einem axialen Ende im Gestell eingespannt und trägt am anderen axialen Ende den Spannarm.

Mit einem erfindungsgemäßen Bündel aus Torsionsstäben ist eine relativ torsionsweiche Feder für große Federwege darstellbar, wobei über die Oberflächenreibung zwischen den einzelnen Torsionsstäben bei einer Verdrehung eine innere Dämpfung erzeugt wird. Im Normalfall werden gerade parallel zueinander verlaufende Torsionsstäbe in dichtest möglicher Packung verwendet. Es sind jedoch auch Abwandlungen möglich, wie sie im einzelnen in der älteren deutschen Patentanmeldung 102 56 402.7 der Anmelderin beschrieben sind. Er kann bei der vorliegenden Lösung Anwendung finden.

Das Bündel aus Torsionsstäben kann am ersten Ende des Torsionsfederaggregats in einer Befestigungsbuchse eingespannt und am zweiten Ende des Torsionsfederaggregats in einer weiteren Buchse eingespannt sein, die mit dem gelagerten Ende des Spannarms drehfest verbunden ist. Die erstgenannte Befestigungsbuchse kann beispielsweise verdrehfest an einem Motorgehäuse angeschraubt werden oder bei unrundem Außenumfang in eine entsprechende Ausnehmung in einem Motorgehäuse formschlüssig eingesetzt werden.

Ein bevorzugter Anwendungsfall der vorstehend genannten Erfindung besteht in einem Riementrieb aus zumindest zwei Riemenscheiben und einem endlosen Riemen mit einer Riemenspannvorrichtung der vorgenannten Art, wobei das Torsionsfederaggregat axial und verdrehfest, insbesondere außerhalb des endlosen Riemens in einem Gestell, eingespannt ist. Hierbei ist vorzugsweise vorgesehen, daß der Spannarm in seiner Nominalposition etwa parallel zur Verbindung zwischen den Drehachsen der Riemenscheiben verläuft, über die der Lostrum läuft.

Eine vorteilhafte Ausführung besteht in einer Riemenspannvorrichtung für einen Riementrieb aus zumindest zwei Riemenscheiben und einem endlosen Riemen, umfassend ein Torsionsfederaggregat mit einer Längsachse A₂ und mit zumindest einem Torsionsstab, wobei das Torsionsfederaggregat axial und verdrehfest in einem Gestell einspannbar ist, einen Spannarm, der mit seinem einen Ende etwa radial zur Längsachse A₂ gerichtet am Torsionsfederaggregat angeordnet ist, sowie eine Spannrolle, die am anderen Ende des Spannarms drehbar befestigt ist, wobei die Drehachse A₁ der Spannrolle im wesentlichen parallel zur Längsachse A₂ des Torsionsfederaggregats verläuft und der Spannarm um die Längsachse A₂ schwingend gegenüber dem Gestell federnd abstützbar ist, wobei der zumindest eine Torsionsstab von einem Rohr umschlossen ist, in dessen dem Spannarm entgegengesetztem Ende das entsprechende Ende des zumindest einen Torsionsstabes verdrehfest festgelegt ist und in dessen anderem Ende der Spannarm in einer radialen Lagerung gelagert ist, wobei der Spannarm mit dem anderen Ende des zumindest einen Torsionsstabes verdrehfest verbunden ist und die mittlere Bewegungsebene E der Spannrolle im mittleren Bereich der genannten radialen Lagerung liegt. Hiermit wird eine Vorrichtung bereitgestellt, die im Bereich der Lagerung zwischen dem Schwingarm oder Spannarm, der die Spannrolle trägt, und dem Rohr, das der unmittelbaren Befestigung der Anordnung an einem Gestell also insbesondere an einem Motorblock dient, querkraftfrei bzw. biegemomentenfrei ist. Hiermit werden Biegeeinflüsse im Bereich der Lagerung des Spannarmes vermieden, so daß die Funktion dieser Lagerung dauerhaft gesichert ist, eine saubere Spannarm- und Spannrollenbewegung in einer Ebene garantiert ist und erhöhter Verschleiß oder erhöhte Reibung in der Lagerung ausgeschlossen werden kann. Die mittlere Bewegungsebene ist hierbei gleichbedeutend mit der mittleren Rollenebene. Diese soll erfindungsgemäß im mittleren Bereich der Axialerstreckung der genannten Lagerung liegen, insbesondere möglichst mittig zur Axialerstreckung genannten Lagerung.

In weiterer Ausgestaltung ist das Bündel aus Torsionsstäben am ersten Ende des Torsionsfederaggregates in einer ersten Buchse eingespannt, die mit dem entsprechenden Ende des Rohres fest verbunden ist. Hierbei ist die Gesamtheit des Bündels insbesondere formschlüssig in einer Öffnung der Buchse eingesetzt.

Weiterhin ist vorgesehen, daß das Bündel aus Torsionsstäben am zweiten Ende des Torsionsfederaggregates in einer zweiten Buchse eingespannt ist, die mit dem einen Ende des Spannarmes drehfest verbunden ist und gegenüber dem Rohr drehbar gelagert ist. Auch hier erfolgt die Anbindung bevorzugt formschlüssig zwischen einer Durchgangsöffnung in der Buchse und dem Bündel aus Torsionsstäben.

Zwischen dem Spannarm und dem Rohr kann ergänzend zur Dämpfung in der Torsionsfeder ein Reibungsdämpfer beliebiger Bauart zusätzlich eingesetzt sein. Dieser Reibungsdämpfer kann innerhalb oder außerhalb des Rohres angeordnet sein.

Für alle Ausführungen kommt als Material der Torsionsstäbe oder -rohre Stahl oder faserverstärkter Kunststoff in Betracht. Die Spannarme können bei allen Lösungen aus Leichtmetalldruckguß oder als Stahlformteile ausgeführt sein. Als Material für die Spannrollen ist Kunststoff oder Stahl bei allen Lösungen geeignet.

Bevorzugte Ausführungsbeispiele der Erfindung sind in den Zeichnungen dargestellt und werden nachstehend anhand der Zeichnungen beschrieben.
Figur 1 zeigt das Prinzip eines Riementriebs mit einarmiger Riemenspannvorrichtung;
Figur 2 zeigt eine perspektivische Darstellung einer Riemenspannvorrichtung für einen Riementrieb nach Figur 1;
Figur 3 zeigt die Riemenspannvorrichtung nach Figur 2;
   a) in Seitenansicht
   b) im Schnitt durch die Drehachsen
   c) in Ansicht auf die Achsen
   d) in perspektivischer Darstellung ähnlich Figur 2;
Figur 4 zeigt den Schnitt nach Figur 3b in vergrößerter Darstellung;
Figur 5 zeigt eine perspektivische Darstellung einer einarmigen Riemenspannvorrichtung für einen Riementrieb in einer weiteren Ausführung;
Figur 6 zeigt eine perspektivische Darstellung der beiden Hälften des Spannarmes der Vorrichtung nach Figur 5;
Figur 7 zeigt die Riemenspannvorrichtung nach Figur 5 im Schnitt durch die Drehachsen.

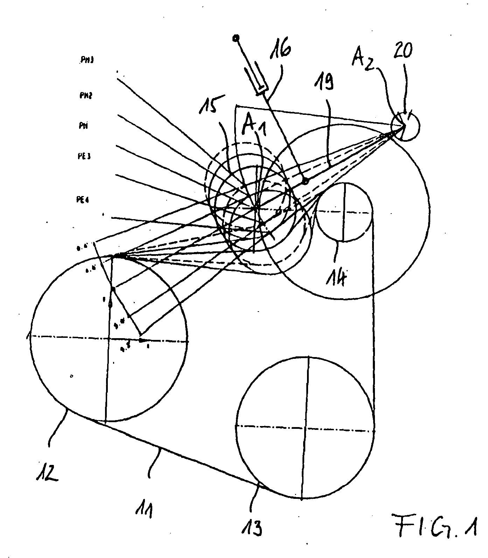

In Figur 1 ist das Prinzipbild eines Riementriebs an einer Brennkraftmaschine in axialer Ansicht auf die Kurbelwelle dargestellt. Ein endloser Riemen 11, insbesondere ein Keilrippenriemen oder ein Zahnriemen, läuft über drei innenliegende Riemenscheiben, nämlich eine auf der Kurbelwelle montierte und von dieser angetriebene Riemenscheibe 12, die den Riementrieb antreibt, eine vom Riemen angetriebene Riemenscheibe 13 für einen Kompressor einer Klimaanlage und eine vom Riemen 11 angetrieben Riemenscheibe 14 für einen elektrischen Generator (Lichtmaschine). Der Zahnriemen läuft im Uhrzeigersinn um. Zwischen der Riemenscheibe 12 und der Riemenscheibe 14 befindet sich der Lostrum, der von einer Spannrolle 15 beaufschlagt wird, die in unterschiedlichen Positionen bei verschiedenen Riemenlängen dargestellt ist. Die Spannrolle 15 ist an einem Spannarm 19 um eine Drehachse A₂ schwenkbar angeordnet, die zugleich die Mittelachse eines Torsionsfederaggregats 20 bildet. Das Torsionsfederaggregat 20 ist mit einem ersten Ende drehfest am Motorblock verankert und trägt an seinem anderen Ende in radialer Anordnung zu seiner Mittelachse den Spannarm 19 mit der Spannrolle 15. Die Spannrolle 15 ist um eine Drehachse A₁ drehbar und mit der glatten Außenseite des Riemens in Kontakt. Der Spannarm 19 ist mittels eines längenveränderlichen Lenkers 16 an einem Gestell abstützbar. Dieser kann Dämpfer- und/oder Federelemente umfassen. Von den verschiedenen Positionen der Spannrolle 15 gibt die mittlere Position PN die Nominalposition an, während die benachbarten Positionen PM2 und PE3 Toleranzbereiche wiedergeben und die äußeren Positionen PM3 den Neuzustand vor einer Anfangsdehnung und die Position PE4 einen Endanschlag jenseits zulässiger Riemendehnung und Alterung wiedergibt.

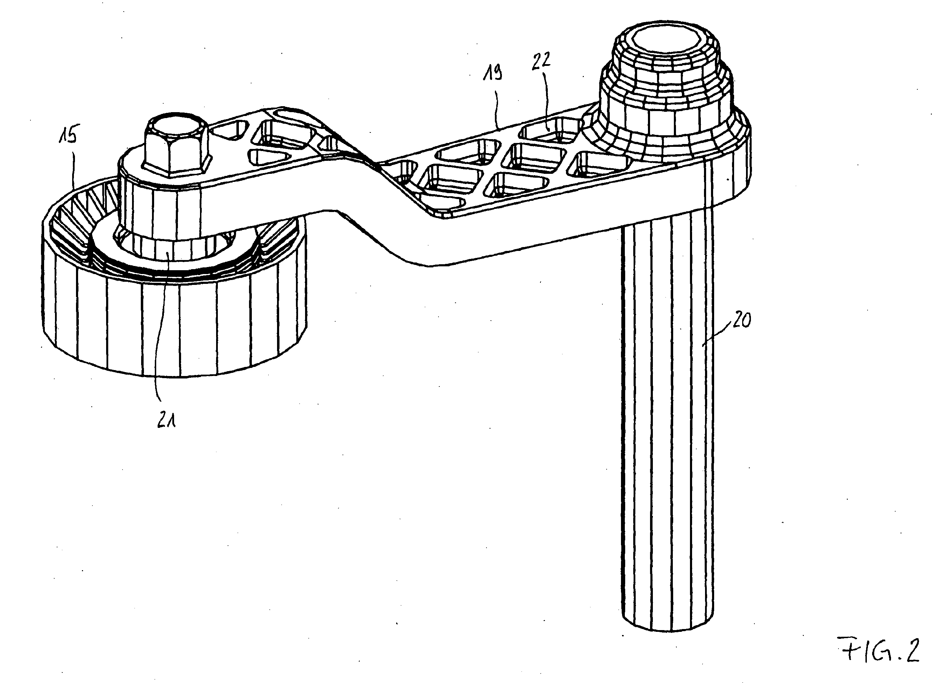

In Figur 2 ist die erfindungsgemäße Riemenspannvorrichtung in ihren wesentlichen Teilen mit der zylindrischen Spannrolle 15, die auf der glatten Außenseite des Riemens anliegt, einem Spannarm 19 und einem Torsionsfederaggregat 20 gezeigt. Die Spannrolle 15 ist ein leichtbauendes Kunststoffteil, das auf einem Lagerzapfen 21 am Spannarm 19 drehbar gelagert ist. Der Spannarm 19 ist ein verkröpfter Träger und weist gewichtsreduzierende Taschen 22 auf einer Seite auf. Der Spannarm 19 ist verdrehfest am oberen Ende des Torsionsfederaggregats gehalten, das Torsionsfederaggregat 20 wird an seinem unteren Ende mit hier nicht im einzelnen dargestellten Mitteln drehfest am Motorblock verankert.

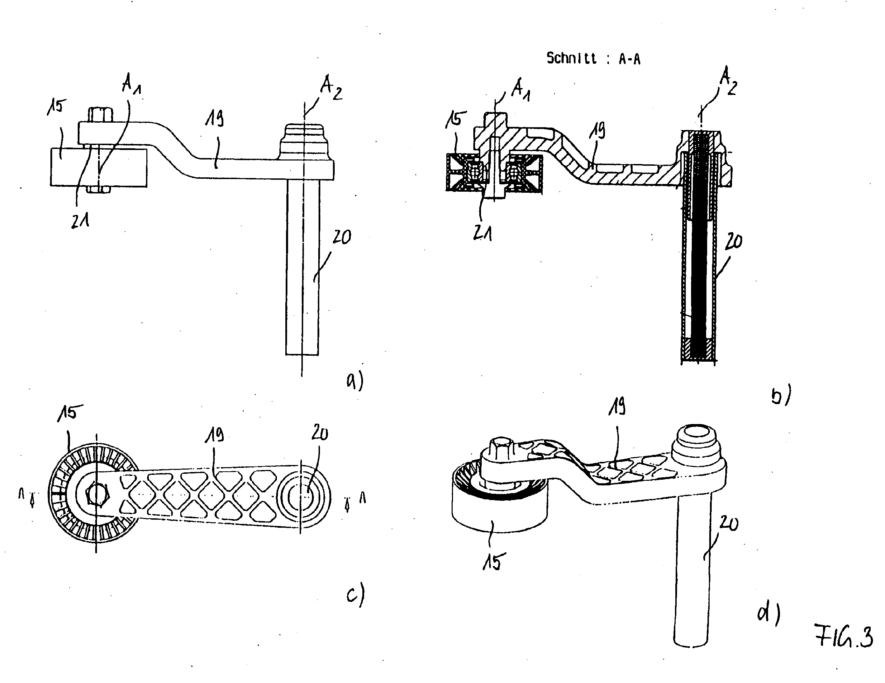

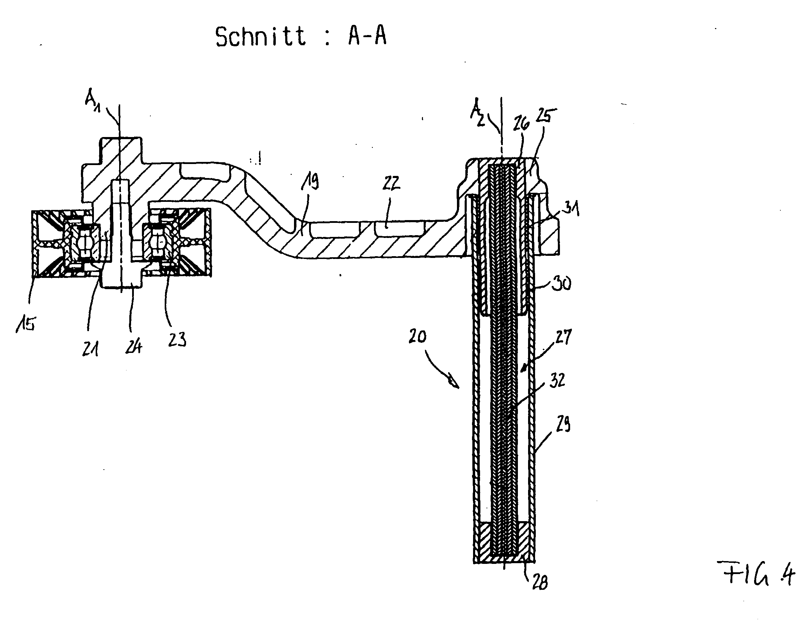

In Figur 3 sind gleiche Einzelheiten wie in Figur 2 mit gleichen Bezugsziffern belegt. Auf die vorhergehende Beschreibung wird insoweit Bezug genommen. Die in Figur 3b erstmals erkennbaren zusätzlichen Einzelheiten werden nachstehend anhand der inhaltsgleichen größeren Figur 4 erläutert.

In Figur 4 ist die Gesamtanordnung nach Figur 3b größer dargestellt. Hierbei ist erkennbar, daß die Taschen 22 zur Gewichtsreduzierung einseitig im Spannarm 19 eingeprägt sind. Am freien Ende des Spannarmes 19 ist der Lagerzapfen 21 gezeigt, auf dem die Spannrolle 15 mittels eines Rollenlagers 23 drehbar gelagert ist. Der Lagerinnenring des Lagers wird mittels einer Schraube 24 auf dem Lagerzapfen 21 gehalten. Die Spannrolle 15 umschließt den Lageraußenring des Lagers formschlüssig. Die Spannrolle ist damit um eine Drehachse A₁ drehbar Am anderen Ende des Spannarmes 19 ist ein Auge 25 ausgebildet, in das eine Buchse 26 drehfest, insbesondere im Preßsitz eingesetzt ist. In die Buchse 26 ist ein Ende eines Bündels 27 von Torsionsfedern 32 eingesetzt, das mit der Buchse 26 als ganzes verdrehfest verbunden ist. Das andere Ende des Bündels 27 von Torsionsfedern 32 ist in eine Buchse 28 eingesetzt, das mit dieser Buchse 28 ebenfalls als ganzes verdrehfest verbunden ist. Auf die Buchsen 26, 28 ist ein Rohr 29 aufgesetzt, das mit der Buchse 28 drehfest verbunden ist. Das oben dargestellte Ende des Rohres 29 übergreift das untere Ende der Buchse 26, wobei zwischen Rohr 29 und Buchse 26 Hülsen 30, 31 eingesetzt sind, die unterschiedlichen Funktionen dienen können. In eingebauten Zustand wird das untere Ende des Torsionsfederaggregats 20 entweder unmittelbar über die Buchse 28 oder über den Außenumfang des Rohres 29 verdrehfest in einer Halterung eingespannt. Damit ist der Spannarm 19 um die Achse A₂ gegenüber der Buchse 28 federnd verdrehbar. Die Hülsen 30, 31 können bei entsprechender Bemessung als Lagerhülsen oder Reibdämpfungshülsen dienen, wenn eine Verdrehbarkeit des oberen Endes des Rohres 29 gegenüber der Buchse 26 möglich ist. Die Hülsen 30, 31 können auch als Drehanschlaghülsen für das obere Ende des Rohres 29 dienen, wenn das Rohr 29 als sequentiell zum Torsionsfederbündel 27 zuschaltbare Rohrfeder dienen soll, die ab einem bestimmten Verdrehwinkel des Torsionsfederaggregats die Federrate erhöhen soll. Die Hülsen 30, 31 können auch als Klemmhülsen dienen, die eine drehfeste Verbindung zwischen dem oberen Ende des Rohres 29 und der Buchse 26 herstellen, so daß das Rohr 29 parallel zum Torsionsfederbündel 27 geschaltet ist und über dem gesamten Verdrehwinkel des Torsionsfederaggregats die Federrate erhöht. Da bei einer Torsion de Federbündels 27 eine geringe, Verkürzung desselben eintritt, können die Enden des Federbündels in zumindest einer der Buchsen 26 und 28 oder in beiden zwar verdrehfest gehalten aber geringfügig axial verschiebbar sein.

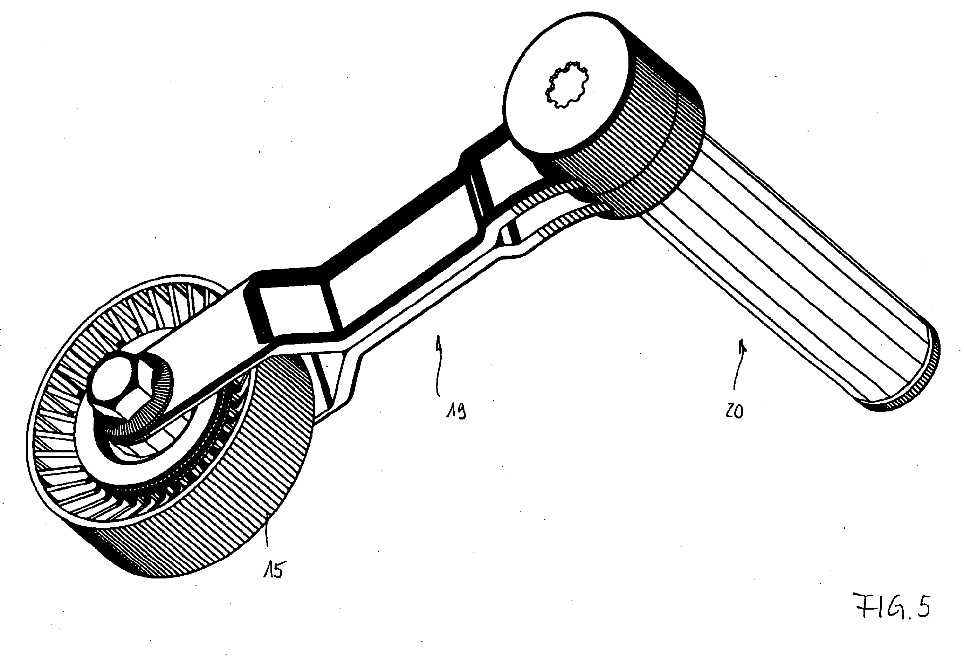

In Figur 5 ist eine weitere erfindungsgemäße Riemenspannvorrichtung mit einer zylindrischen Spannrolle 15, einem Spannarm 19 und einem Torsionsfederaggregat 20 gezeigt. Der Spannarm 19 ist hier aus zwei Hälften zusammengesetzt, deren Teilungsebene etwa in der mittleren Bewegungsebene der Rolle bzw. des Spannarms liegt und jeweils eine Lagerstelle für die Spannrolle 15 bilden. Näheres läßt sich in der folgenden Figur erkennen.

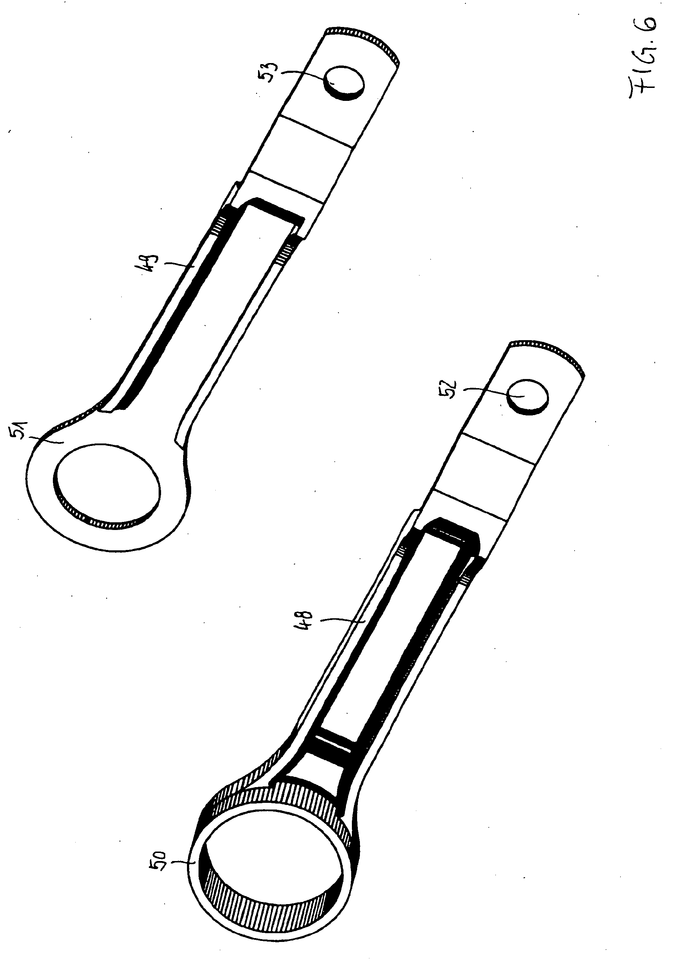

In Figur 6 sind zwei Armhälften 48, 49 erkennbar, von denen die erste eine Buchse 50 und die zweite ein flaches Auge 51 umfaßt. Die Hälften 48, 49 werden miteinander so verbunden, daß Buchse 50 und Auge 51 gemeinsam das Auge 25 bilden und auf das Torsionsfederaggregat 20 aufgeschoben werden können. Gleichzeitig ist in jeder der Hälften eine Lagerstelle 52, 53 zu erkennen, die bei miteinander verbundenen Hälften den Zapfen für die Spannrolle aufnehmen.

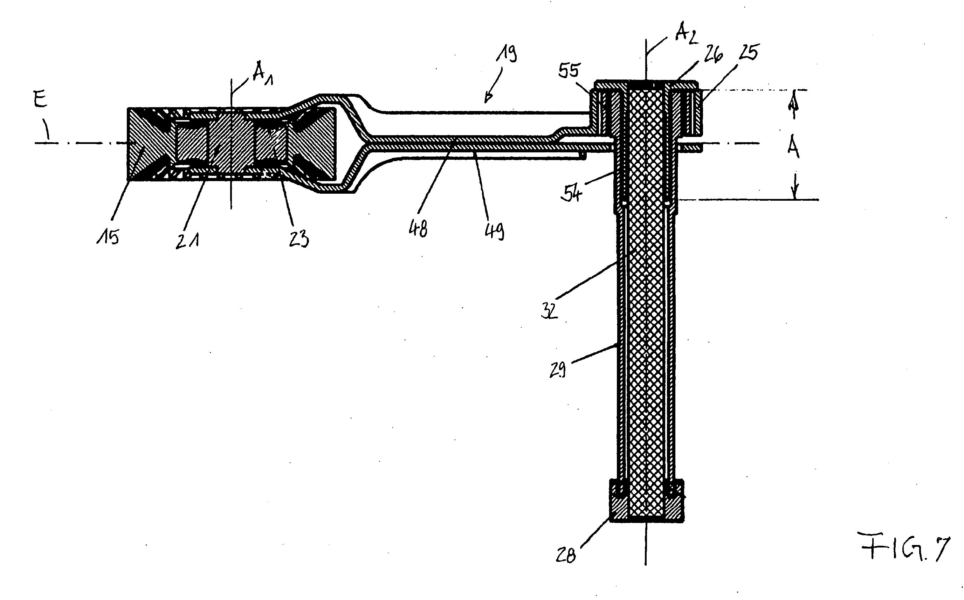

In Figur 7 ist die Bauweise des zusammengesetzten Spannarmes 19 aus den zwei Armhälften 48, 49 näher erkennbar. Ein Lagerzapfen 21 wird vor dem Zusammensetzen der Hälften in die Lageröffnung eingesetzt. Die Spannrolle 15 ist mittels eines nicht im einzelnen dargestellten Rollenlagers 23 drehbar im Spannarm gelagert. Die Spannrolle ist um die Drehachse A₁ drehbar. Am entgegengesetzten Ende ist die Buchse 50 stirnseitig mit einer Buchse 26 drehfest verbunden, die drehbar in ein Rohr 29 eingesetzt ist und mit diesem eine Lagerung 54 bilden. In die Hülse 26 ist eine Torsionsfederanordnung 32 verdrehfest mit dem oberen Ende eingesteckt. Das untere Ende der Torsionsfeder 32 ist in eine weitere Buchse 28 verdrehfest eingesteckt. Mit der Buchse 28 ist das Rohr 29 drehfest und axial verbunden. Zwischen der Buchse 50 und dem oberen Ende des Rohres 29 ist eine mehrteilige Hülse 55 gezeigt, die einen Reibungsdämpfer zwischen dem Auge 25 und dem oberen Ende des Rohres 29 bilden kann. Erfindungsgemäß liegt die mittlere Bewegungsebene E der Spannrolle 15 und des Spannarmes 19, die zugleich die Teilungsebene zwischen den Hälften 48 und 49 bildet, innerhalb des axialen Bereiches A der Lagerung 54. Insbesondere liegt die Ebene E etwa mittig zur Axialerstreckung A der Lagerung 54. Die Lagerung 54 zwischen Spannarm 19 und Rohr 29 ist damit querkraftfrei bzw. biegemomentenfrei, so daß die Funktion der Lagerung im Höchstmaße gewährleistet ist.

### Riemenspannvorrichtung

### Bezugszeichenliste

- 11: Riemen
- 12: Riemenscheibe
- 13: Riemenscheibe
- 14: Riemenscheibe
- 15: Spannrolle
- 16: Lenker
- 17: Reibrolle
- 18: Reibrolle
- 19: Spannarm
- 20: Torsionsfederaggregat
- 21: Drehzapfen
- 22: Tasche
- 23: Rollenlager
- 24: Schraube
- 25: Auge
- 26: Buchse
- 27: Federbündel
- 28: Buchse
- 29: Rohr
- 30: Hülse
- 31: Hülse
- 32: Torsionsfeder
- 33: Tellerfeder

- 48: Armhälfte
- 49: Armhälfte
- 50: Hülse
- 51: Auge
- 52: Lagerstelle
- 53: Lagerstelle
- 54: Lagerstelle
- 55: Hülsendämpfer

## Patentansprüche

1. Riemenspannvorrichtung für einen Riementrieb aus zumindest zwei Riemenscheiben (12, 13, 14) und einem endlosen Riemen (11), umfassend ein Torsionsfederaggregat (20) mit einer Längsachse A₂ und mit zumindest einem Torsionsstab oder -rohr (32), wobei das Torsionsfederaggregat (20) axial und verdrehfest in einem Gestell einspannbar ist, einen Spannarm (19), der mit seinem einen Ende etwa radial zur Längsachse A₂ gerichtet am Torsionsfederaggregat (20) angeordnet ist, sowie eine Spannrolle (15), die am anderen Ende des Spannarms (19) drehbar befestigt ist, wobei die Drehachse A₁ der Spannrolle (15) im wesentlichen parallel zur Längsachse A₂ des Torsionsfederaggregats (20) verläuft und der Spannarm (19) um die Längsachse A₂ schwingend gegenüber dem Gestell federnd abstützbar ist, wobei das Torsionsfederaggregat (20) eine Mehrzahl von einzelnen Torsionsstäben (32) enthält, die ein jeweils an ihren Enden miteinander zusammengespanntes Bündel (27) bilden und Linien- oder Flächenkontakt miteinander haben,
**dadurch gekennzeichnet,**
**daß** das Bündel (27) aus Torsionsstäben (32) von einem Rohr (29) umschlossen ist, das mit seinem einen Ende verdrehfest mit dem einen Ende des Bündels (27) aus Torsionsstäben (32) verbunden ist und mit seinem anderen Ende unter Reibung gegenüber dem anderen Ende des Bündels (27) verdrehbar ist und einen zum Bündel aus Torsionsstäben parallel geschalteten Reibungsdämpfer bildet.

2. Vorrichtung nach Anspruch 1,
**dadurch gekennzeichnet,**
**daß** das Bündel (27) aus Torsionsstäben (32) am ersten Ende des Torsionsfederaggregats (20) in einer ersten Buchse (28) eingespannt ist, die mit dem Rohr (29) fest verbunden ist.

3. Vorrichtung nach einem der Ansprüche 1 oder 2,
**dadurch gekennzeichnet,**
**daß** das Bündel (27) aus Torsionsstäben (32) am zweiten Ende des Torsionsfederaggregats (20) in einer zweiten Buchse (26) eingespannt ist, die mit dem einen Ende des Spannarms (19) drehfest verbunden ist und gegenüber dem Rohr (29) drehbar gelagert ist.

4. Vorrichtung nach einem der Ansprüche 1 bis 3,
**dadurch gekennzeichnet,**
**daß** der Spannarm (19) in dem am Spannarm (19) liegenden Ende des Rohres (29) in einer radialen Lagerung (54) gelagert ist und die mittlere Bewegungsebene E der Spannrolle (15) im mittleren Bereich der genannten radialen Lagerung (54) liegt.

5. Vorrichtung nach einem der Ansprüche 1 bis 4,
**dadurch gekennzeichnet,**
**daß** das Rohr (29) unmittelbar im Gestell einspannbar oder am Gestell anschraubbar ist.

6. Vorrichtung nach Anspruch 5,
**dadurch gekennzeichnet,**
**daß** das Rohr (29) nahe der Bewegungsebene E der Spannrolle (15) einspannbar oder anschraubbar ist.

7. Vorrichtung nach einem der Ansprüche 1 bis 6,
**dadurch gekennzeichnet,**
**daß** das Rohr (29) auf seiner Länge mehrfach eingespannt oder angeschraubt ist.

8. Vorrichtung nach einem der Ansprüche 1 bis 7,
**dadurch gekennzeichnet,**
**daß** der Spannarm (19) aus zwei Hälften (48, 49) zusammengesetzt ist, deren Teilungsebene etwa der mittleren Bewegungsebene E der Spannrolle (15) entspricht und die jeweils eine Lagerstelle (52, 35) für die Spannrolle (15) bilden.

9. Vorrichtung nach einem der Ansprüche 1 bis 8,
**dadurch gekennzeichnet,**
**daß** zwischen dem Spannarm (19) und dem Rohr (29) ein Reibungsdämpfer (55) wirksam eingesetzt ist.

10. Vorrichtung nach Anspruch 9,
**dadurch gekennzeichnet,**
**daß** der Reibungsdämpfer (55) außerhalb oder innerhalb des Rohres (29) angeordnet ist.

## Claims

1. A belt tensioning device for a belt drive having at least two belt pulleys (12, 13, 14) and a continuous belt (11), comprising a torsion spring unit (20) with a longitudinal axis A₂ and with a torsion bar or torsion tube (32), wherein the torsion spring unit (20) can be clamped axially and in a rotationally fast way into a frame, with a tensioning arm (19) which, by means of its one end, is arranged at the torsion spring unit (2) so as to extend approximately radially relative to the longitudinal axis A₂, as well as a tensioning roller (15) which is rotatably fixed at the other end of the tensioning arm (19), wherein the axis of rotation A₁ of the tensioning roller (15) extends approximately parallel to the longitudinal axis A₂ of the torsion spring unit (20) and wherein the tensioning arm (19) is resiliently supported relative to the frame so as to oscillate around the longitudinal axis A₂, wherein the torsion spring unit (20) contains a plurality of individual torsion bars (32) which form a bundle (27), which are tensioned together at their respective ends and which are in line contact or surface contact with one another,
**characterised in**
**that** the bundle (27) of torsion bars (32) is enclosed by a tube (29) which, by means of its one end, is connected in a rotationally fixed way to the one end of the bundle (27) of torsion bars (32) and which, by means of its other end, is rotatable under friction relative to the other end of the bundle (27) and which forms a friction damper connected in parallel to the bundle of torsion bars.

2. A device according to claim 1,
**characterised in**
**that** the bundle (27) of torsion bars (32), at the first end of the torsion spring unit (20), is clamped into a first bushing (28) which is firmly connected to the tube (29).

3. A device according to any one of claims 1 or 2,
**characterised in**
**that** the bundle (27) of torsion bars (32), at the second end of the torsion bar unit (20) is clamped into a second bushing (26) which is connected in a rotationally fixed way to the one end of the tensioning arm (19) and which is rotatably supported relative to the tube (29).

4. A device according to any one of claims 1 to 3,
**characterised in**
**that** the tensioning arm (19) is supported in radial bearing means (54) in the end of the tube (29), which end is positioned at the tensioning arm (19) and that the central plane of movement E of the tensioning roller (15) is positioned in the central region of said radial bearing means (54).

5. A device according to any one of claims 1 to 4,
**characterised in**
**that** the tube (29) is clampable directly into the frame or bolted to the frame.

6. A device according to claim 5,
**characterised in**
**that** the tube (29) is clampable in or bolted on near the plane of movement E of the tensioning roller (15).

7. A device according to any one of claims 1 to 6,
**characterised in**
**that** the tube (29), along its length, is clamped-in or bolted-on several times.

8. A device according to any one of claims 1 to 7,
**characterised in**
**that** the tensioning arm (19) is composed of two halves (48, 49) whose dividing plane corresponds approximately to the central plane of movement E of the tensioning roller (15) and which each form a bearing region (52, 35) for the tensioning roller (15).

9. A device according to any one of claims 1 to 8,
**characterised in**
**that** a friction damper (55) is effectively inserted between the tensioning arm (19) and the tube (29).

10. A device according to claim 9,
**characterised in**
**that** the friction damper (55) is arranged outside or inside the tube (29).

## Revendications

1. Dispositif tendeur de courroie pour un entraînement à courroie composé d'au moins deux poulies (12, 13, 14) et d'une courroie sans fin (11), comprenant un groupe à ressort de torsion (20) avec un axe longitudinal A₂ et au moins une barre ou un tube de torsion (32), dans lequel le groupe à ressort de torsion (20) est susceptible d'être serré axialement et solidaire en rotation dans un châssis, un bras de tensionnement (19) qui est agencé sur le groupe à ressort de torsion (20) en étant orienté avec une extrémité approximativement radialement par rapport à l'axe longitudinal A₂, ainsi qu'un rouleau de tensionnement (15) fixé avec possibilité de rotation à l'autre extrémité du bras de tensionnement (19), l'axe de rotation A₁ du rouleau de tensionnement (15) s'étendant sensiblement parallèlement à l'axe longitudinal A₂ du groupe à ressort de torsion (20), et le bras de tensionnement (19) est soutenu avec effet élastique par rapport au châssis en oscillation autour de l'axe longitudinal A₂, et le groupe à ressort de torsion (20) contient une pluralité de barres de torsion individuelles (32) qui forment un faisceau (27) conjointement serré à leurs extrémités respectives et sont en contact les unes avec les autres suivants des lignes ou des surfaces,
**caractérisé en ce que**
le faisceau (27) de barres de torsion (32) est enfermé par un tube (29) qui est relié et par l'une de ses extrémités solidairement en rotation avec une extrémité du faisceau (27) de barres de torsion (32) et capable de rotation avec son autre extrémité sous friction par rapport à l'autre extrémité du faisceau (27), et qui forme un amortisseur à friction monté en parallèle par rapport au faisceau de barres de torsion.

2. Dispositif selon la revendication 1,
**caractérisé en ce que** le faisceau (27) de barres de torsion (32) est enserré dans une première douille (28) à la première extrémité du groupe à ressort de torsion (20), laquelle est reliée fermement au tube (29).

3. Dispositif selon l'une des revendications 1 ou 2,
**caractérisé en ce que** le faisceau (27) de barres de torsion (32) est enserré dans une seconde douille (26) à la seconde extrémité du groupe à ressort de torsion (20), laquelle est reliée solidairement en rotation avec la première extrémité du bras de tensionnement (19) et montée avec possibilité de rotation par rapport au tube (29).

4. Dispositif selon l'une des revendications 1 à 3,
**caractérisé en ce que** le bras de tensionnement (19) est monté dans une première monture radiale (54) à l'extrémité du tube (29) qui se trouve au niveau du bras de tensionnement (19), et le plan de déplacement médian E du rouleau de tensionnement (15) se trouve dans la zone médiane de ladite monture radiale (54).

5. Dispositif selon l'une des revendications 1 à 4,
**caractérisé en ce que** le tube (29) est susceptible d'être enserré directement dans le châssis ou d'être vissé sur le châssis.

6. Dispositif selon la revendication 5,
**caractérisé en ce que** le tube (29) est susceptible d'être enserré ou vissé à proximité du plan de déplacement E du rouleau de tensionnement (15).

7. Dispositif selon l'une des revendications 1 à 6,
**caractérisé en ce que** le tube (29) est enserré ou vissé plusieurs fois sur sa longueur.

8. Dispositif selon l'une des revendications 1 à 7,
**caractérisé en ce que** le bras de tensionnement (19) se compose de deux moitiés (48, 49), dont le plan de séparation correspond approximativement au plan de déplacement moyen E du rouleau de tensionnement (15) et qui forment chacune un emplacement de pallier (52, 35) pour le rouleau de tensionnement (15)

9. Dispositif selon l'une des revendications 1 à 8,
**caractérisé en ce qu'**un amortisseur à friction (55) est intégré de manière à agir entre le bras de tensionnement (19) et le tube (29).

10. Dispositif selon la revendication 9,
**caractérisé en ce que** l'amortisseur à friction (55) est agencé à l'extérieur ou à l'intérieur du tube (29).
